# NEW EUROPEAN PATENT SPECIFICATION

(11) **EP 2 907 770 B2**
(45) Date of publication and mention of the opposition decision: **09.02.2022**
(45) Mention of the grant of the patent: 01.11.2017
(21) Application number: 14172351.0
(22) Date of filing: 13.06.2014
(51) Int. Cl.: B65D 85/48, B60P 3/00, B65G 49/06

(54) **System for the packing and transport of sheets of glass**
System zum Verpacken und Transportieren von Glasscheiben
Système pour l'emballage et de transport de feuilles de verre

(30) Priority: 17.02.2014 ES 201430204
(43) Date of publication of application: 19.08.2015
(73) Proprietor: Transportes Matias Elipe, S.L., 31500 Tudela, Navarra (ES)
(72) Inventor: Elipe Molinero, Juan Carlos, 31500 Tudela, Navarra (ES)
(74) Representative: Algemeen Octrooi- en Merkenbureau B.V.

(56) References cited:
- DE-U1-202013 010 500
- US-A- 4 193 736

## Description

### OBJECT OF THE INVENTION

The present invention relates to a system for the packing and transport of sheets of glass facilitating the packing and transport of glass inside a glass-carrier gondola for suspended glass of a truck and preventing the sheets of glass from tipping during transport.

The object of the invention is a system for the packing and transporting of sheets of glass comprising an L-frame or L-shaped rack, fastening rods and slings which allow the rapid packing and unpacking of said sheets of glass within the glass-carrier gondola for suspended glass of the truck.

### BACKGROUND OF THE INVENTION

Systems for the packing and transport of sheets of glass known in the prior comprise hydraulic clamps belonging to the truck chassis enabling the sheets of glass to be held inside the truck for subsequent transport. These systems require hydraulic power units and auxiliary structures thereby reducing the space available inside the glass-carrier gondola for suspended glass of the truck and increasing its weight, as it can weigh as much as 1 ton, so manageability becomes complicated in the event of a mishap, being a very complicated and expensive system, involving much specialized maintenance, plus there is a risk of tipping when loading and unloading because at the time of depositing or picking up the rack with glass, the latter is not held by the hydraulic system.

Furthermore, in former systems, external stress due to the centrifugal force generated on the truck when it takes a corner creates a risk of the sheets of glass tipping, with the consequent risk of breakage since there are at most 6 points of support on a chassis that is not completely rigid.

The system for the packing and transport of sheets of glass of the present invention overcomes all the above drawbacks as it is much lighter than the known systems, preventing the sheets of glass from tipping in the glass-carrier gondola for suspended glass of the truck and it allows fast packing and unpacking of said sheets of glass.

US Patent No. 4,193,736, discloses a system according to the preamble of claim 1, and relates to a railcar for shipping articles, e.g., loose glass sheets or crates. The railcar is of the type having a flatbed supported on a pair of spaced wheel carriages or trucks .A plurality of deck runners are secured on the flat bed of a railcar in predetermined spaced relationship to each other to provide a supporting surface above the surface of the bed of the railcar. A stanchion is secured to each of the deck runners such that the center of gravity of the stanchion and articles to be loaded is at the longitudinal center of the railcar. The articles are loaded on the deck runners and stanchion and secured thereto by restraining facilities to prevent lateral motion of the articles. Thereafter end restraints are secured to the bed of the railcar to prevent longitudinal motion of the articles.

German Gebrauchsmusterschrift DE 20 2013 010 500 relates to a device for storing and transporting vertically standing disc elements, in particular rectangular insulating glass units, comprising a substantially L-shaped base frame with a receiving space for receiving the disc elements, which extends transversely to the vertical plane of the disc elements to be accommodated, and which is inclined at an acute angle with respect to the vertical at an acute angle.

### DESCRIPTION OF THE INVENTION

The system for packing and transporting sheets of glass of the present invention comprises an L-frame rack, fastening rods and slings that allow quick packing and unpacking of said sheets of glass inside a glass-carrier gondola for suspended glass of a truck.

The system for packing and transporting sheets of glass according to the present invention comprises a system according to claim 1. The vertical structure comprises several rollers with a horizontal axis of rotation that allow the slings to slip through them closing the system once the fastening rods have been placed.

The L -frame rack further comprises two antagonistic ends on which the slings are fixed, as well as tensioners for the tightening thereof, so that when the fastening rods rest on the horizontal surface of the L-frame rack once the sheets of glass have been arranged thereon, the slings pass from the L-frame rack to the fastening rods, and because they are fixed to the L-frame rack projections, they are tensioned by the tensioners, the sheets of glass being packed between the L-frame rack, the fastening rods and the slings without any possible movement.

The present system comprises displaceable bolts placed inside holes in the glass-carrier gondola for suspended glass of the truck and are arranged on the horizontal structure of the L-frame rack, precluding rotation thereof around a horizontal axis, thus preventing tipping due to an external stress due to the centrifugal force generated on the truck when taking a corner, and preventing the L-frame rack from moving forward or backward in the event of a collision or an extremely steep slope.

The system for the packing and transport of sheets of glass of the present invention is especially designed for very large sheets of glass, with maximum dimensions of 6 m long and 3.2 m high placed on the L-frame rack.

The system for the packing and transport of sheets of glass thus configured requires a simpler and cheaper maintenance than those of systems of the prior art, it is safer for transport because it makes the sheets of glass, the L-frame rack, the slings and the fastening rods form a fixed block with a set of uniformly distributed points of support not affected by torsion of the truck chassis, on which it is only supported and bolted, which prevents overturning or abrupt shifting of the L-frame rack backwards, in addition to providing greater safety for glass loading and unloading manoeuvres.

Furthermore, the system for the packing and transport of sheets of glass of the present invention may use any of the L-frame racks and glass-carrier gondolas currently existing on the market, making it compatible with loading and internal factory movement systems and with robotic automated unloading systems.

Another advantage is that the system can be quickly dismantled in less than 2 minutes, leaving the L-frame rack free for use by other glass-carrier gondolas for suspended glass on the market regardless of the fastening system used.

### DESCRIPTION OF THE DRAWINGS

To complement the description being made and in order to aid a better understanding of the characteristics of the invention according to a preferred practical embodiment thereof, a set of drawings are included as an integral part of said description, which by way of illustration and not limiting the scope of the invention, show the following:

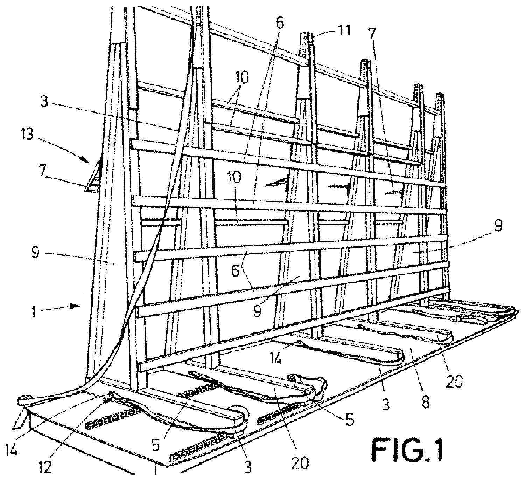

Figure 1 shows a perspective view of the L-frame rack of the system for the packing and transport of sheets of glass of the present invention.

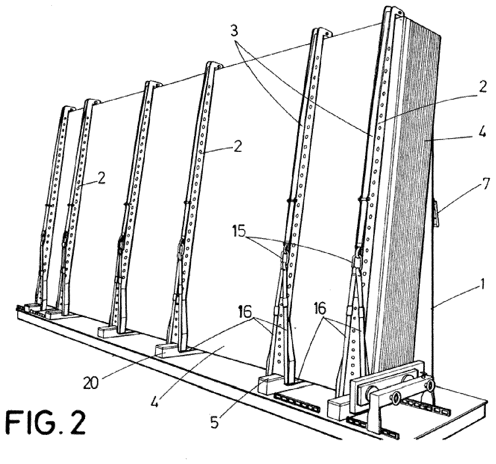

Figure 2 shows a perspective view of the system for the packing and transport of sheets of glass when the sheets of glass are packed between the L-frame rack, the fastening rods and the slings.

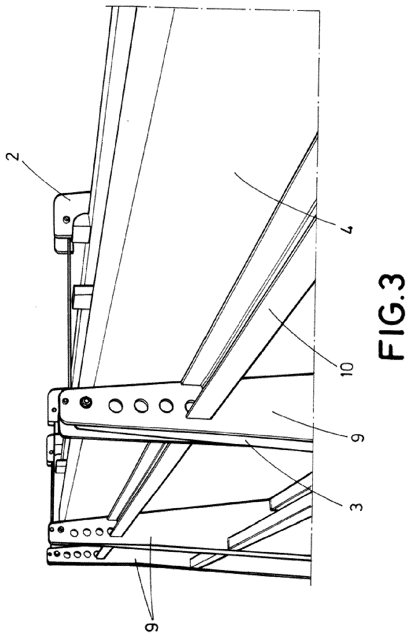

Figure 3 shows a detailed view of the top of the system for the packing and transport of sheets of glass depicting how the slings pass from the L-frame rack to the fastening rods, and the sheets of glass become placed between them and the slings.

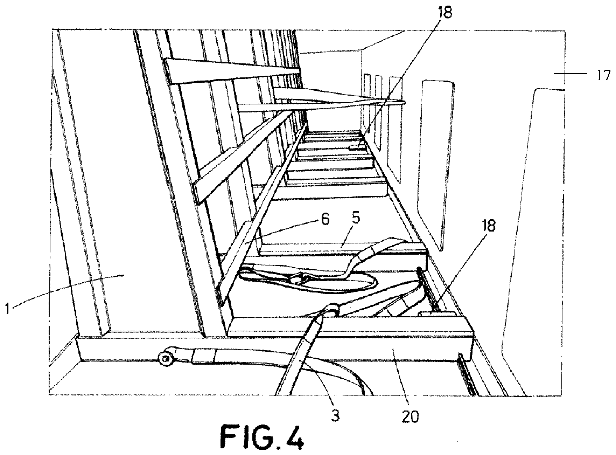

Figure 4 shows a perspective view of the system for the packing and transport of sheets of glass when the L-frame rack is arranged inside the glass carrier gondola for suspended glass of the truck and the bolts to prevent overturning are arranged through the holes in the glass-carrier gondola for suspended glass of the truck, wherein neither the fastening rods nor the sheets of glass are shown for the sake of simplicity.

### PREFERRED EMBODIMENT OF THE INVENTION

According to a preferred embodiment, the system for the packing and transport of sheets of glass of the present invention comprises an L-frame rack(1), fastening rods (2) and slings (3) which are fixed to the L-frame rack (1) at two opposite ends (12, 13) thereof (1). The L-frame rack (1) further comprises a horizontal surface (5) whereon the edges of the sheets of glass (4) rest and an essentially vertical surface (6), preferably tilted 3° to the vertical, whereon the surface of the sheets of glass (4) are supported. The horizontal (5) and vertical (6) surfaces are discontinuous.

The L-frame rack (1) further comprises a horizontal structure (8) formed by horizontal beams (20), whereon the horizontal surface (5), and a vertical structure (9,10) rest, the latter comprising pillars (9) joined together by horizontal reinforcement bars (10).

The vertical structure (9, 10) further comprises a plurality of rollers (11) with a horizontal axis of rotation that allow the slings (3) to slip through them, closing the system once the fastening rods (2) have been placed and conducting the tensioning thereof (3), as described later.

With the sheets of glass (4) arranged on the L-frame rack (1) and the fastening rods (2) also arranged on the L-frame rack (1), particularly on the horizontal structure (8) of the same (1), the slings (3) are arranged passing from the L-frame rack (1), through the rollers (11) with horizontal axis of rotation to the fastening rods (2), further being fixed to the L-frame rack (1) at the two opposing ends (12, 13) thereof (1), a first end (12) and a second end (13).

The first end (12) is arranged on some pins (14) present in the horizontal structure (8) of the L-frame rack (1), while the second end (13) is arranged on the pillars (9) of the vertical structure (9, 10) of the L-frame rack (1), the second end (13) on which a tensioner (7) is arranged allowing the slings (3) to be tensioned.

The slings (3) comprise two sections, each attached to one L-frame rack (1) fastening end before placing the sheets of glass (4) and the fastening rods (2), sections which may be joined together by a quick clamping device (15), for example a clip. The section of sling (3) attached to the first end (12) of the L-frame rack (1), or first section (16) comprises a metal reinforcement to avoid the sling (3) being cut in case of breakage of a sheet of glass (4) during transport, as this first section (16) is located beneath the sheets of glass (4) during transport. Preferably this first section (16) of sling (3) comprises two branches that bind to two pins (14) arranged on both sides of the horizontal beams (20) of the horizontal structure (8) of the L-frame rack (1), the fastening rods (2) comprising two antagonistic branches on which the branches of the first section (16) of sling (3) are arranged.

The system further comprises some movable bolts (18) which are arranged in holes of the glass-carrier gondola for suspended glass of the truck (17) and which are situated on the horizontal structure (8) of the L-frame rack (1), precluding rotation thereof (1) about a horizontal axis. Preferably the system comprises two bolts (18) on each side of the glass-carrier gondola for suspended glass of the truck (17) preventing tipping on either side.

## Claims

1. System for the packing and transport of sheets of glass (4) comprising an L-frame rack (1) whereon the sheets of glass (4) are supported, the L-frame rack (1) comprising a horizontal structure (8), the system further comprising fastening rods (2) leaning on said sheets of glass (4), slings (3) which are fixed at two antagonistic ends (12,13) of said L-frame rack (1) and tensioners (7) for the tensioning of the slings (3), wherein the sheets of glass (4) are arranged between the set formed by said L-frame rack (1), fastening rods (2) and slings (3), said sheets of glass (4), L-frame rack (1), fastening rods (2) and slings (3) forming a fixed block, **characterised in that** said system further comprises a truck (17) and a glass-carrier gondola for suspended glass of the truck (17), **in that** said fixed block is inside the glass-carrier gondola for suspended glass of the truck (17), and **in that** said system further comprises moveable bolts (18) arranged in holes of the glass-carrier gondola of the truck (17), wherein said bolts are situated on the horizontal structure (8) of said L-frame rack (1) to preclude rotation of said L-frame rack (1) around a horizontal axis and the forward or backward movement of said L-frame rack (1), and consequently said fixed block.

2. System for the packing and transport of sheets of glass according to claim 1 **characterized in that** the L-frame rack (1) comprises a vertical structure (9, 10) comprising a plurality of rollers (11) with a horizontal axis of rotation to slide the slings (3) through the rollers (11) when tensioning the slings (3).

3. System for the packing and transport of sheets of glass according to claim 1 **characterized in that** it comprises two bolts (18) on each side of the glass-carrier gondola of the truck (17).

4. System for the packing and transport of sheets of glass according to any of the preceding claims **characterized in that** the L-frame rack (1) comprises a horizontal surface (5) whereon the edges of the sheets of glass (4) rest and an essentially vertical surface (6) whereon the surface of at least one of the sheets of glass (4) is supported, wherein the horizontal surface (5) rests on the horizontal structure (8), and wherein the essentially vertical surface rests on the/ a vertical structure (9, 10).

5. System for the packing and transport of sheets of glass according to claim 4 **characterized in that** the horizontal (5) and vertical (6) surfaces are discontinuous.

6. System for the packing and transport of sheets of glass according to claim 5 **characterized in that** the horizontal structure (8) comprises horizontal beams (20), whereon the horizontal surface (5) rests, and a vertical structure (9, 10) that comprises pillars (9) joined together by horizontal reinforcement bars (10).

## Patentansprüche

1. System zum Verpacken und Transportieren von Glasscheiben (4), umfassend ein L-förmiges Rahmengestell (1), auf dem die Glasscheiben (4) gelagert sind, wobei das L-förmige Rahmengestell (1) eine horizontale Struktur (8) umfasst, wobei das System weiterhin an die genannten Glasscheiben (4) angelehnte Befestigungsstangen (2), Schlingen (3), die an zwei gegenüberliegenden Enden (12, 13) des L-förmigen Rahmengestells (1) befestigt sind, und Spanner (7) zum Spannen der Schlingen (3) umfasst, wobei die Glasscheiben (4) zwischen dem L-förmigen Rahmengestell (1), den Befestigungsstangen (2) und den Schlingen (3) angeordnet sind und die genannten Glasscheiben (4), das L-förmige Rahmengestell (1), die Befestigungsstangen (2) und die Schlingen (3) einen festen Block bilden,
**dadurch gekennzeichnet, das**
das genannte System weiterhin einen Lastkraftwagen (17) und einen freihängenden Glasträger-Behälter des Lastkraftwagens (17) umfasst, dass der genannte feste Block innerhalb des freihängenden Glasträger-Behälters des Lastkraftwagens (17) ist und dass das genannte System weiterhin bewegliche Bolzen (18) umfasst, die in Bohrungen des Glasträger-Behälters des Lastkraftwagens (17) angeordnet sind, wobei sich die genannten Bolzen in der horizontalen Struktur (8) des L-förmigen Rahmengestells (1) befinden, um die Rotation des genannten L-förmigen Rahmengestells (1) um eine horizontale Achse und die Vorwärts- oder Rückwärtsbewegung des genannten L-förmigen Rahmengestells (1) und somit des genannten festen Blocks zu verhindern.

2. System zum Verpacken und Transportieren von Glasscheiben nach Anspruch 1,
**dadurch gekennzeichnet, dass**
das L-förmige Rahmengestell (1) eine vertikale Struktur (9, 10) umfasst, die eine Mehrzahl an Rollen (11) mit einer horizontalen Drehachse umfasst, um die Schlingen (3) beim Spannen der Schlingen (3) durch die Rollen (11) gleiten zu lassen.

3. System zum Verpacken und Transportieren von Glasscheiben nach Anspruch 1,
**dadurch gekennzeichnet, dass**
es zwei Bolzen (18) auf jeder Seite des Glasträger-Behälters des Lastkraftwagens (17) umfasst.

4. System zum Verpacken und Transportieren von Glasscheiben nach einem der vorherigen Ansprüche,
**dadurch gekennzeichnet, dass**
das L-förmige Rahmengestell (1) eine horizontale Fläche (5), auf der die Kanten der Glasscheiben (4) aufliegen, und eine im Wesentlichen vertikale Fläche (6), auf der die Oberfläche wenigstens einer Glasscheibe (4) abgestützt wird, umfasst, wobei die horizontale Fläche (5) auf der horizontalen Struktur (8) aufliegt und wobei die im Wesentlichen vertikale Fläche an der/einer vertikalen Struktur (9, 10) anliegt.

5. System zum Verpacken und Transportieren von Glasscheiben nach Anspruch 4,
**dadurch gekennzeichnet, dass**
die horizontale (5) und vertikale (6) Fläche unterbrochen sind.

6. System zum Verpacken und Transportieren von Glasscheiben nach Anspruch 5,
**dadurch gekennzeichnet, dass**
die horizontale Struktur (8) horizontale Balken (20), aufweichen die horizontale Fläche (5) aufliegt, und eine vertikale Struktur (9, 10), umfassend Stützpfeiler (9), verbunden durch horizontale Verstärkungsstäbe (10), umfasst.

## Revendications

1. Système pour l'emballage et le transport de feuilles de verre (4) comprenant un châssis en L (1) sur lequel sont supportés les feuilles de verre (4), le châssis en L (1) comprenant une structure horizontale (8), le système comprenant en outre des tiges de fixation (2) prenant appui sur lesdites feuilles de verre (4), des élingues (3) qui sont fixées au niveau des deux extrémités antagonistes (12, 13) dudit châssis en L (1) et des tendeurs (7) pour tendre les élingues (3), où les feuilles de verre (4) sont agencées entre l'ensemble formé par ledit châssis en L (1), lesdites tiges de fixation (2) et lesdites élingues (3), lesdites feuilles de verre (4), ledit châssis en L (1), lesdites tiges de fixation (2) et lesdites élingues (3) formant un bloc fixe, **caractérisé en ce que** ledit système comprend en outre un camion (17) et un wagon-tombereau de support de verre pour le verre suspendu du camion (17), **en ce que** ledit bloc fixe se trouve à l'intérieur du wagon-tombereau de support de verre pour le verre suspendu du camion (17), et **en ce que** ledit système comprend en outre des boulons mobiles (18) agencés dans des trous du wagon-tombereau de support de verre du camion (17), dans lequel lesdits boulons sont situés sur la structure horizontale (8) dudit châssis en L (1) pour empêcher la rotation dudit châssis en L (1) autour d'un axe horizontal et le mouvement vers l'avant ou vers l'arrière dudit châssis en L (1) et par conséquent dudit bloc fixe.

2. Système pour l'emballage et le transport de feuilles de verre selon la revendication 1, **caractérisé en ce que** le châssis en L (1) comprend une structure verticale (9, 10) comprenant une pluralité de rouleaux (11) avec un axe de rotation horizontal pour faire glisser les élingues (3) à travers les rouleaux (11) lors de la tension des élingues (3).

3. Système pour l'emballage et le transport de feuilles de verre selon la revendication 1, **caractérisé en ce qu'**il comprend deux boulons (18) sur chaque côté du wagon-tombereau de support de verre du camion (17).

4. Système pour l'emballage et le transport de feuilles de verre selon l'une des revendications précédentes, **caractérisé en ce que** le châssis en L (1) comprend une surface horizontale (5) sur laquelle reposent les bords des feuilles de verre (4) et une surface essentiellement verticale (6) sur laquelle est supportée la surface d'au moins l'une des feuilles de verre (4), où la surface horizontale (5) repose sur la structure horizontale (8) et où la surface essentiellement verticale repose sur la/ une structure verticale (9, 10).

5. Système pour l'emballage et le transport de feuilles de verre selon la revendication 4, **caractérisé en ce que** les surfaces horizontale (5) et verticale (6) sont discontinues.

6. Système pour l'emballage et le transport de feuilles de verre selon la revendication 5, **caractérisé en ce que** la structure horizontale (8) comprend des poutres horizontales (20), sur lesquelles repose la surface horizontale (5) et une structure verticale (9, 10) qui comprend des montants (9) assemblés par des barres de renforcement horizontales (10).
